# EUROPÄISCHE PATENTSCHRIFT

(11) **EP 2 390 990 B1**
(45) Veröffentlichungstag und Bekanntmachung des Hinweises auf die Patenterteilung: **02.12.2015**
(21) Anmeldenummer: 11167193.9
(22) Anmeldetag: 24.05.2011
(51) Int. Cl.: H02K 41/03, H02K 1/14, H02K 7/08

(54) **Linearmotor**
Linear motor
Moteur linéaire

(30) Priorität: 25.05.2010 EP 10163788
(43) Veröffentlichungstag der Anmeldung: 30.11.2011
(73) Patentinhaber: NTI AG, 8957 Spreitenbach (CH)
(72) Erfinder: Ausderau, Daniel, 8500 Frauenfeld (CH); Hitz, Marco, 3213 Kleinbösingen (CH); Rohner, Ronald, 8967 Widen (CH)
(74) Vertreter: Bohest AG

(56) Entgegenhaltungen:
- EP-A1- 1 465 328
- JP-A- 11 225 468
- JP-A- 61 177 156
- JP-A- 2010 041 761

## Beschreibung

Die vorliegende Erfindung betrifft einen Linearmotor gemäss dem Oberbegriff des unabhängigen Patentanspruchs. Ein derartiger Linearmotor ist aus dem Dokument JP2010041761 bekannt.

Ein Linearmotor umfasst typischerweise einen Stator, einen relativ zum Stator linear beweglichen Läufer sowie eine Ansteuer- und Kontrollelektronik. Um den Läufer zu bewegen, sind bei einem bekannten Linearmotor im Stator bestrombare Wicklungen, sogenannte Antriebswicklungen, vorgesehen, während der Läufer mit einer permanentmagnetischen Erregung versehen ist. Die permanentmagnetische Erregung wird zumeist durch diskrete Permanentmagnete erzeugt, die in einer bestimmten Art und Weise im Läufer angeordnet sind.

Bei einem bekannten Linearmotor mit innenliegendem Läufer umfasst der Läufer Permanentmagnete, welche ein Magnetfeld mit wechselnder Polarität aufbauen. Eine bekannte Ausführungsform eines derartigen Läufers besteht aus einem dünnen Metallrohr, z. B. aus Chromstahl, dessen Wanddicke beispielsweise einige Zehntelmillimeter beträgt, in welchem scheibenförmige axial polarisierte Permanentmagnete eingepresst sind, zwischen denen gegebenenfalls noch Abstandshalter aus magnetisch leitenden oder magnetisch nicht leitenden Materialien liegen.

Zur Lagerung des Läufers werden Gleitlager eingesetzt, die in unterschiedlichen Ausführungen bekannt sind. Beispielsweise kommen Gleitlager aus Kunststoff zum Einsatz, die an den beiden Enden des Stators angeordnet sind. Die Gleitlager können entweder ins Statorgehäuse eingepresst sein (Presspassung) oder als separate Lagereinrichtung von aussen an das Statorgehäuse angeflanscht sein. Diese Gleitlager sind auswechselbar, haben aber den Nachteil, dass der Läufer nicht über die ganze Statorlänge gelagert und der Läuferhub somit eingeschränkt ist, da das jeweilige Läuferende nicht über das Gleitlager hinaus in den Stator einfahren kann. Ausserdem besteht die Gefahr, dass der Läufer bei einem fehlerbedingten Eindringen eines Läuferendes in den Stator das Gleitlager durchschlägt, der Läufer mit der Antriebswicklung in Kontakt kommt und dann unter Spannung steht. Dies gilt es unter allen Umständen zu vermeiden, da je nach Höhe der Spannung gefährliche, teilweise sogar lebensbedrohliche Situationen auftreten können. Zwar ist zu diesem Zweck bereits eine Erdung des Läufers mittels Schleppkabel vorgeschlagen worden. Jedoch ist diese Lösung umständlich, aufwändig zu realisieren, und sie kann unter Umständen den Läuferhub reduzieren und die Wartungsintervalle verkürzen.

Es ist auch ein durchgehendes Gleitlager aus Kunststoff bekannt, das gleichzeitig als Wickelkörper zur Aufnahme der Antriebswicklung dient. Das Gleitlager erstreckt sich im Wesentlichen über die gesamte Länge des Stators und ist entsprechend langlebiger. Allerdings werden an die Präzision bei der Herstellung eines solchen Gleitlagers bzw. des Wickelkörpers sehr hohe Anforderungen gestellt, da einerseits der Abstand zwischen Gleitlager und Läufer im Hinblick auf den Wirkungsgrad des Linearmotors so klein wie möglich sein sollte, andererseits aber schon sehr geringe Krümmungen des Gleitlagers zu unerwünschten Verklemmungen des Läufers führen können. Solche Krümmungen des Gleitlagers können beispielsweise aufgrund der durch die Ströme in der Antriebswicklung hervorgerufenen thermischen Ausdehnungen auftreten. Die dadurch verursachten Verklemmungen können zu einem Totalausfall des Linearmotors führen und da das Gleitlager gleichzeitig als Wickelkörper dient, muss in solchen Fällen der ganze Linearmotor ersetzt werden. Ausserdem besteht die Gefahr, dass bei einem Durchreiben des Gleitlagers der Läufer mit der Antriebswicklung in Kontakt kommt und dann unter Spannung steht.

Der vorliegenden Erfindung liegt daher die Aufgabe zugrunde, einen Linearmotor mit einer Lagerung vorzuschlagen, welcher einen oder mehrere der genannten Nachteile nicht aufweist und bei dem insbesondere vermieden wird, dass das oben genannte Sicherheitsproblem (Kontakt des Läufers mit den Antriebswicklungen) auftreten kann, ohne dass es dazu einer aufwändigen Erdung des Läufers bedarf.

Diese Aufgabe wird durch den erfindungsgemässen Linearmotor gelöst, wie er durch die Merkmale des unabhängigen Patentanspruchs 1 definiert ist. Vorteilhafte Ausführungsvarianten des erfindungsgemässen Linearmotors ergeben sich aus den Merkmalen der abhängigen Patentansprüche.

Insbesondere umfasst der erfindungsgemässe Linearmotor einen Stator und einen Läufer, sowie ein innerhalb des Stators angeordnetes Lagerrohr, welches ein Trägerrohr umfasst, das derart ausgebildet ist, das zumindest im Wesentlichen dieselbe Länge aufweist wir der Stator, sowie ein innen am Trägerrohr anliegendes Gleitlager, in welchem der Läufer axial beweglich gelagert ist. Das Lagerrohr ist als separates, austauschbar im Stator angeordnetes Lagerrohr ausgebildet.

Wird das Gleitlager durchgerieben, so kommt der Läufer allenfalls mit dem Trägerrohr in Kontakt, welches vorzugsweise eine hohe Festigkeit und elektrische Leitfähigkeit aufweist und geerdet ist. Er kann somit nicht mit der Antriebswicklung des Linearmotors in Kontakt kommen. Das ist deshalb so, weil die Länge des Trägerrohrs zumindest im Wesentlichen der vorbestimmten Länge des Stators entspricht, das Trägerrohr allenfalls geringfügig kürzer sein kann als der Stator oder aber länger als dieser ausgebildet sein kann, beispielsweise so lange wie ein den Stator umgebendes Motorgehäuse. Das Trägerrohr kann aber nur um eine solche Länge kürzer ausgebildet sein, dass der Läufer keinesfalls mit den Antriebswicklungen des Linearmotors in Kontakt kommen kann.

Zudem ist das Lagerrohr als separates, austauschbar im Stator angeordnetes Lagerrohr ausgebildet und kann nach einem Durchreiben des Gleitlagers ersetzt werden, so dass nicht der ganze Linearmotor ersetzt zu werden braucht. Das Lagerrohr kann einfach und präzise hergestellt werden und z. B. mechanisch im Stator fixiert werden. Bei der Konzeption des Stators kann dieser im Hinblick auf einen möglichst hohen Wirkungsgrad ausgelegt werden, da der Schutz des Läufers vor Kontakt mit der Antriebswicklung vom Lagerrohr übernommen wird, welches typischerweise geerdet ist. Das Trägerrohr des Lagerrohrs kann beispielsweise ein Chromstahlrohr sein und erlaubt auf einfache Art und Weise ein gleichmässig präzise gearbeitetes Lagerrohr mit einer dünnen Wanddicke (z. B. 0.6 mm - 0.8 mm, insbesondere 0.7 mm) herzustellen, um einerseits einen hohen Wirkungsgrad des Linearmotors zu ermöglichen und andererseits eine Verklemmung des Läufers im Stator zu vermeiden. Das Chromstahlrohr weist auch sehr gute Eigenschaften bezüglich Haltbarkeit und Hygiene auf. Ausserdem verhindert ein geerdetes, elektrisch leitendes Trägerrohr eine kapazitive Kopplung von Antriebswicklungen und Läufer. Somit können bei einer Umrichteransteuerung auch bei ungeerdetem Läufer keine hochfrequenten Läufer-Erdspannungen entstehen, die sich bei einer Berührung des Läufers zu gefährlichen Strömen ausbilden könnten.

Gemäss einem weiteren Aspekt des erfindungsgemässen Linearmotors weist das Gleitlager eine Länge auf, die zumindest im Wesentlichen der Länge des Trägerrohrs entspricht. Dieses Ausführungsbeispiel zeichnet sich durch ein langlebiges Gleitlager aus und ermöglicht einen grossen Läuferhub, da die Läuferenden bis weit in den Stator hinein einfahren können und dennoch jederzeit die gute Lagerung des Läufers gewährleistet ist. Dabei weist das Gleitlager vorzugsweise eine Länge auf, die zumindest 90% der Länge des Trägerrohrs beträgt.

Gemäss einem weiteren Aspekt des erfindungsgemässen Linearmotors umfasst das Gleitlager eine Mehrzahl von einzelnen im Trägerrohr angeordneten Lagerringen, wobei die einzelnen Lagerringe als separate, unabhängig voneinander in das Trägerrohr einbringbare Lagerringe ausgebildet sind. Zwar kann das innen am Trägerrohr anliegende Gleitlager bei der Herstellung des Lagerrohrs grundsätzlich aus einem einzigen Stück produziert werden und anschliessend in das Trägerrohr eingebracht werden. Einfacher und kostengünstiger ist die Herstellung des Lagerrohrs aber möglich, wenn eine Mehrzahl von einzelnen Lagerringen produziert, in das Trägerrohr eingebracht und innen am Trägerrohr anliegend fixiert wird.

Nach einem weiteren Aspekt des erfindungsgemässen Linearmotors sind zumindest einzelne der Lagerringe derart voneinander beabstandet im Trägerrohr angeordnet, dass zwischen den jeweiligen voneinander beabstandet angeordneten Lagerringen Zwischenräume zur Vorratshaltung von Schmiermittel gebildet sind. Um eine besonders lange Lebensdauer des Gleitlagers zu erreichen, kann eine Schmierung des Läufers mit Schmiermittel vorteilhaft sein. Die Zwischenräume, die zwischen den voneinander beabstandet angeordneten Lagerringen gebildet werden, erlauben auf einfache Art und Weise, Schmiermittel bereitzustellen.

Gemäss einem weiteren Aspekt des erfindungsgemässen Linearmotors weisen zumindest einzelne der Lagerringe Einfräsungen zur Aufnahme von Schmiermittel auf. Die Einfräsungen erlauben, dass bei den linearen Bewegungen des Läufers das Schmiermittel gleichmässig im Gleitlager verbleibt und nicht das Gleitlager verlässt. Lagerringe mit Einfräsungen zur Aufnahme von Schmiermittel erlauben eine Anordnung der Lagerringe ohne Zwischenräume zwischen den Lagerringen, die Herstellung des Lagerrohrs wird dadurch vereinfacht, und das Gleitlager ist langlebiger.

Gemäss einem weiteren Aspekt des erfindungsgemässen Linearmotors sind die Lagerringe kraftschlüssig oder formschlüssig im Trägerrohr angeordnet oder in das Trägerrohr eingeklebt. Die Lagerringe können hierbei ins Trägerrohr eingepresst oder kraftarm über eine axiale Einführungsnut an die gewünschte axiale Position im Trägerrohr gebracht und dann in ihre Endposition gedreht werden. Eine formschlüssige Verbindung gewährleistet auch bei grossen Temperaturschwankungen eine sichere Verbindung. Ein Verkleben der Lagerringe im Trägerrohr stellt eine weitere kostengünstige Möglichkeit dar, um die Lagerringe im Trägerrohr zu fixieren.

Gemäss einem weiteren Aspekt des erfindungsgemässen Linearmotors sind die Lagerringe aus unterschiedlichen Materialien mit unterschiedlichen Eigenschaften hergestellt, z. B. in Bezug auf die Gleitfähigkeit, Temperaturbeständigkeit oder Feuchtigkeitsbeständigkeit. Beispielsweise können abwechselnd Lagerringe aus unterschiedlichen Materialien eingesetzt werden, wie z. B. solche, die besser für eine trockene bzw. besser für eine feuchte Betriebsumgebung geeignet sind, oder für unterschiedliche Temperaturbereiche. Denkbar ist auch der Einsatz von harten und besonders langlebigen Lagerringen im Bereich der jeweiligen Enden des Lagerrohrs und von weichen Lagerringen mit besonders guten Gleiteigenschaften im Bereich der Mitte des Lagerrohrs. Da die Lagerrohre auswechselbar sind, kann derselbe Linearmotor mit einem auf die jeweilige Anforderung zugeschnittenen Lagerrohr ausgerüstet werden.

Gemäss einem weiteren Aspekt des erfindungsgemässen Linearmotors ist als Gleitlager ein Gleitbelag in Form einer Beschichtung auf der Innenwand des Trägerrohrs aufgebracht, z.B. durch Aufspritzen, durch Plasmabeschichtung oder durch ein Tauchverfahren.

Nach einem weiteren Aspekt des erfindungsgemässen Linearmotors weist dieser weiterhin einen Wickelkörper auf, auf welchem Antriebswicklungen angeordnet sind, sowie einen zwischen dem Wickelkörper und dem Lagerrohr angeordneten Luftspalt oder eine elektrisch nicht leitende Isolationsschicht. Im Betrieb werden die Antriebswicklungen bestromt, wodurch sich der Wickelkörper thermisch leicht verformen kann. Damit diese Verformungen keinen Einfluss auf das Gleitlager und die linearen Bewegungen des Läufers haben, wird beispielsweise ein kleiner Luftspalt zwischen dem Wickelkörper und dem Lagerrohr vorgesehen, in welchem gegebenenfalls Isolationsfolien angeordnet sein können. Alternativ kann auch eine weiche Isolationsschicht (z.B. eine Kunststoffschicht) zwischen dem Wickelkörper und dem Lagerrohr angeordnet werden, die den Raum zwischen dem Wickelkörper und dem Lagerrohr vollständig ausfüllt.

Gemäss einem weiteren Aspekt des erfindungsgemässen Linearmotors sind Antriebswicklungen im Stator vorgesehen, die gegenüber dem Lagerrohr offen oder nur durch eine dünne Isolationsfolie getrennt angeordnet sind. Um den Wirkungsgrad des Linearmotors zu verbessern, können aufgrund des erfindungsgemässen Lagerrohrs im Stator gegenüber dem Lagerrohr offenliegende (ungeschützte) oder nur durch eine dünne Isolationsfolie getrennte Antriebswicklungen eingesetzt werden, wodurch der Abstand der Antriebswicklungen vom Läufer bzw. von dessen Permanentmagneten verringert werden kann.

Nach einem weiteren Aspekt des erfindungsgemässen Linearmotors umfasst der Stator magnetisch leitfähige (leitenden) Elemente, z.B. Eisenblechpakete. Die Antriebswicklungen sind zwischen diesen magnetisch leifähigen (leitenden) Elementen angeordnet. Die magnetisch leitfähigen (leitenden) Elemente ermöglichen einen verbesserten Wirkungsgrad des Linearmotors durch die höhere Flussdichte in diesen Elementen im Vergleich zu magnetisch nicht leitfähigen (nicht leitenden) Elementen.

Gemäss einem weiteren Aspekt des erfindungsgemässen Linearmotors umfasst der Stator magnetisch nicht leitende Unterteilungen (z.B. Kunststoffscheiben). Die Antriebswicklungen sind zwischen den magnetisch nicht leitenden Unterteilungen angeordnet. Solche magnetisch nicht leitende Unterteilungen, z.B. Kunststoffscheiben, stellen eine günstige Art und Weise dar, Wickelkammern für die Anordnung der Antriebswicklungen im Stator bereitzustellen.

Nach einem weiteren Aspekt des erfindungsgemässen Linearmotors ist im Stator zwischen den Antriebswicklungen und dem Lagerrohr ein Führungsrohr angeordnet, welches das Lagerrohr umschliesst. Das Führungsrohr ist fest mit dem Stator verbunden und ist typischerweise dünnwandig (ca. 0.2 mm - 0.4 mm, insbesondere 0.3 mm) ausgebildet, z. B. aus Chromstahl oder Carbon. Auch das Trägerrohr kann dann dünnwandiger (ca. 0.3 mm - 0.5 mm, insbesondere 0.4 mm) ausgebildet sein als bei einem Linearmotor ohne Führungsrohr. Zudem vereinfacht das Führungsrohr das Einbringen bzw. Austauschen des Lagerrohrs in den Stator des Linearmotors bei der Herstellung oder beim Ersetzen. Das Führungsrohr oder das Trägerrohr oder beide können geerdet sein.

Im Folgenden wird die Erfindung anhand mehrerer Ausführungsbeispiele mit Hilfe der Zeichnungen detaillierter beschrieben. Es zeigen:
- Fig. 1: einen Längsschnitt durch ein erstes Ausführungsbeispiel eines erfindungsgemässen Linearmotors mit Lagerrohr;
- Fig. 2: einen Längsschnitt durch ein zweites Ausführungsbeispiel eines erfindungsgemässen Linearmotors (ohne Läufer) mit dem Lagerrohr aus Fig. 1;
- Fig. 3: einen Längsschnitt durch ein drittes Ausführungsbeispiel eines erfindungsgemässen Linearmotors mit dem Lagerrohr aus Fig. 1;
- Fig. 4: einen Längsschnitt durch ein viertes Ausführungsbeispiel eines erfindungsgemässen Linearmotors mit dem Lagerrohr aus Fig. 1;
- Fig. 5: einen Längsschnitt durch das Lagerrohr aus Fig. 1;
- Fig. 6: einen Längsschnitt durch ein zweites Ausführungsbeispiel eines Lagerrohrs des erfindungsgemässen Linearmotors;
- Fig. 7: einen Längsschnitt durch ein drittes Ausführungsbeispiel eines Lagerrohrs des erfindungsgemässen Linearmotors;
- Fig. 8: einen Längsschnitt durch ein viertes Ausführungsbeispiel eines Lagerrohrs des erfindungsgemässen Linearmotors;
- Fig. 9: einen Längsschnitt durch ein fünftes Ausführungsbeispiel eines Lagerrohrs des erfindungsgemässen Linearmotors; und
- Fig. 10: einen Längsschnitt durch ein sechstes Ausführungsbeispiel eines Lagerrohrs des erfindungsgemässen Linearmotors.

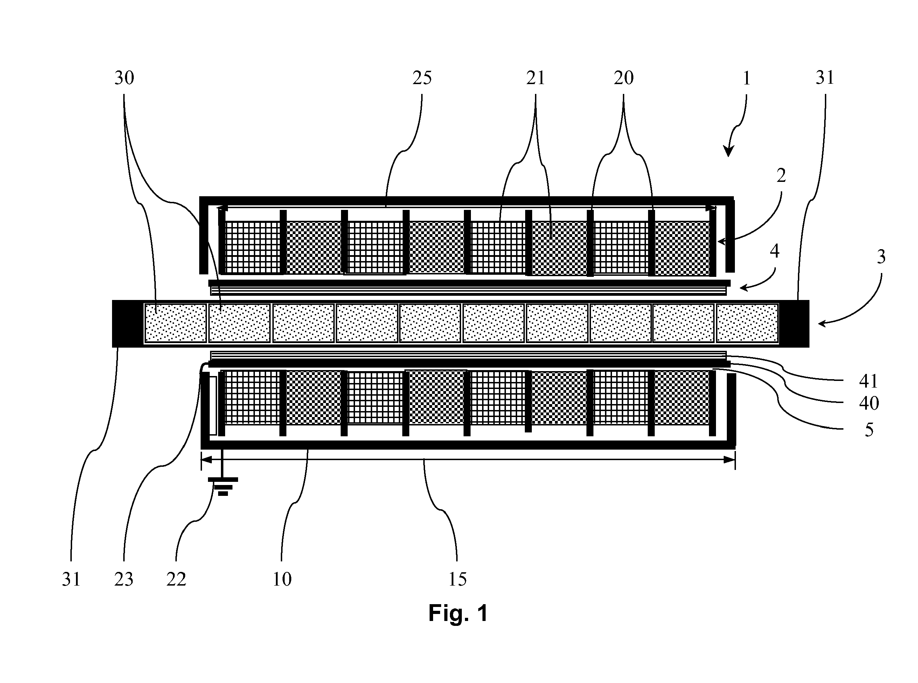

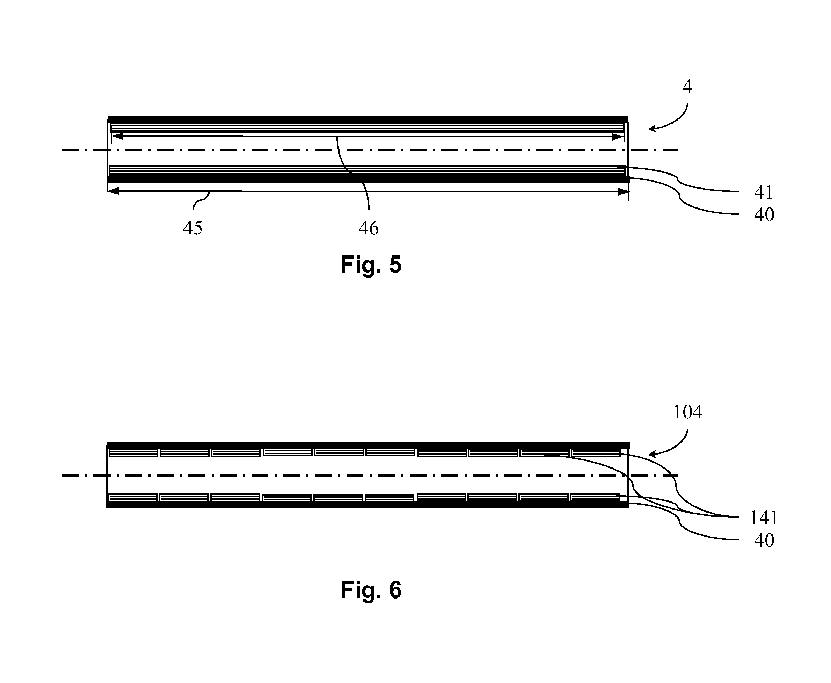

Fig. 1 zeigt einen Längsschnitt durch ein erstes Ausführungsbeispiel eines erfindungsgemässen Linearmotors 1 mit einem Stator 2 und einem Läufer 3. Der Stator 2 umfasst magnetisch nicht leitende Unterteilungen in Form von Kunststoffscheiben 20 und Antriebswicklungen 21, wobei die Antriebswicklungen 21 zwischen den Kunststoffscheiben 20 angeordnet sind. Der Stator 2 ist in einem Motorgehäuse 10 angeordnet. Der Stator 2 weist eine vorbestimmte Länge 25 auf und ist mit Erdpotential 22 verbunden. Der Läufer 3 weist Permanentmagnete 30 auf, beispielsweise Neodymmagnete, deren Magnetfeld mit dem von den Antriebswicklungen erzeugten Magnetfeld wechselwirkt, wodurch der Läufer relativ zum Stator 2 linear bewegt werden kann. Der Läufer 3 ist in einem separaten, austauschbaren Lagerrohr 4 gelagert, das ein Trägerrohr 40 umfasst, beispielsweise ein Chromstahlrohr, das derart ausgebildet ist, dass es - wie hier gezeigt - innen im Stator 2 des Linearmotors 1 anordenbar ist. Ferner umfasst das Lagerrohr 4 ein innen am Trägerrohr 40 anliegendes Gleitlager 41 zur Lagerung des Läufers. Das Trägerrohr 40 weist eine Länge 45 (siehe Fig. 5) auf, die zumindest im Wesentlichen der vorbestimmten Länge 25 des Stators 2 entspricht. Das Trägerrohr 40 ist über eine leitende Verbindung 23 über das Motorgehäuse 10 mit Erdpotential 22 verbunden. Die Antriebswicklungen 21 sind gegenüber dem Lagerrohr 4 offenliegend, um einen möglichst hohen Wirkungsgrad des Linearmotors 1 zu ermöglichen. Ein Luftspalt 5, in welchem typischerweise Isolationsfolien angeordnet sind, ist zwischen den offen liegenden Antriebswicklungen 21 und dem Lagerrohr 4 angeordnet. Der Luftspalt 5 bewirkt, dass thermische Ausdehnungen der Kunststoffscheiben 20 aufgrund der bestromten Antriebswicklungen 21 die Lagerung des Läufers 3 nicht beeinflussen. Das Gleitlager 41 weist eine Länge 46 (siehe Fig. 5) auf, die zumindest im Wesentlichen der Länge 45 (siehe Fig. 5) des Trägerrohrs 40 entspricht. Somit können die Läuferenden 31 jeweils weit in den Stator 2 einfahren, wobei die gute Lagerung des Läufers 3 jederzeit erhalten bleibt. Wird das Gleitlager 41 durchgerieben, so kommt der Läufer 3 allenfalls mit dem geerdeten Trägerrohr 40 in Kontakt, nicht aber mit den Antriebswicklungen 21. Das Trägerrohr 40 kann allenfalls geringfügig kürzer sein als der Stator 2 oder aber länger als dieser ausgebildet sein, beispielsweise so lange wie die Länge 15 des Motorgehäuses 10. Ist das Trägerrohr 40 geringfügig kürzer ausgebildet als der Stator 2, so kann die Länge des Trägerrohrs 40 nur um einen solchen Betrag kürzer sein als die Länge des Stators 2, dass der Läufer 3 keinesfalls mit den Antriebswicklungen 21 des Linearmotors 1 in Kontakt kommen kann.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen.

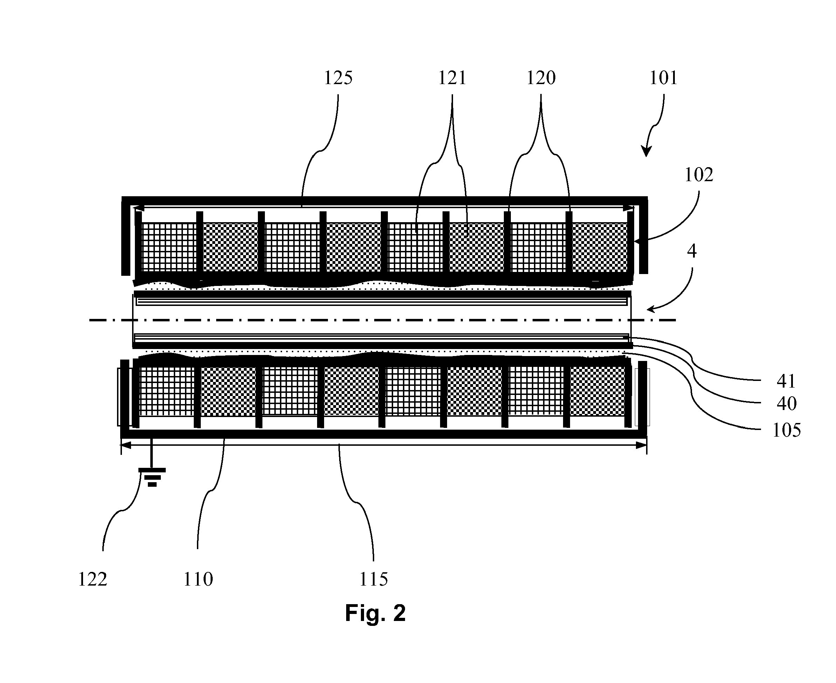

Fig. 2 zeigt einen Längsschnitt durch ein zweites Ausführungsbeispiel eines erfindungsgemässen Linearmotors 101 (Darstellung ohne Läufer) mit einem Stator 102. Der Stator 102 umfasst einen Wickelkörper 120 mit Antriebswicklungen 121 und weist eine vorbestimmte Länge 125 auf. Der Stator 102 ist in einem Motorgehäuse 110 angeordnet, welches mit Erdpotential verbunden ist. Der Linearmotor 101 weist ferner ein Lagerrohr 4 zur Lagerung des Läufers 3 (siehe Fig. 1) auf. Das Lagerrohr 4 umfasst ein Trägerrohr 40, das derart ausgebildet ist, dass es innen im Stator 102 des Linearmotors 101 anordenbar ist, sowie ein innen am Trägerrohr 40 anliegendes Gleitlager 41 zur Lagerung des Läufers. Das Trägerrohr 40 ist geerdet (in Fig. 2 nicht dargestellt) und weist eine Länge 45 (siehe Fig. 5) auf, die zumindest im Wesentlichen der vorbestimmten Länge 125 des Stators 102 entspricht. Der Wickelkörper 120 ist bei diesem Ausführungsbeispiel gegenüber dem Lagerrohr 40 geschlossen ausgebildet, d. h. die Wicklungen sind im Stator 102 gegenüber dem Lagerrohr 4 geschlossen angeordnet. Eine weiche Kunststoffschicht 105 als elektrisch nicht leitende Isolationsschicht ist zwischen dem Lagerrohr 4 und dem Wickelkörper 120 angeordnet. Die weiche Kunststoffschicht 105 vermeidet, dass thermische Ausdehnungen des Wickelkörpers 120 verursacht durch die bestromten Antriebswicklungen 121 die Lagerung des Läufers beeinflussen. Wird das Gleitlager 41 durchgerieben, so kommt der Läufer allenfalls mit dem geerdeten Trägerrohr 40 in Kontakt, nicht aber mit den Antriebswicklungen 121. Das Trägerrohr 40 kann geringfügig kürzer sein als der Stator 102 oder aber länger als dieser ausgebildet sein, beispielsweise so lange wie die Länge 115 des Motorgehäuses 110. Es gelten diesbezüglich die gleichen Erwägungen wie bei dem Ausführungsbeispiel gemäss Fig. 1.

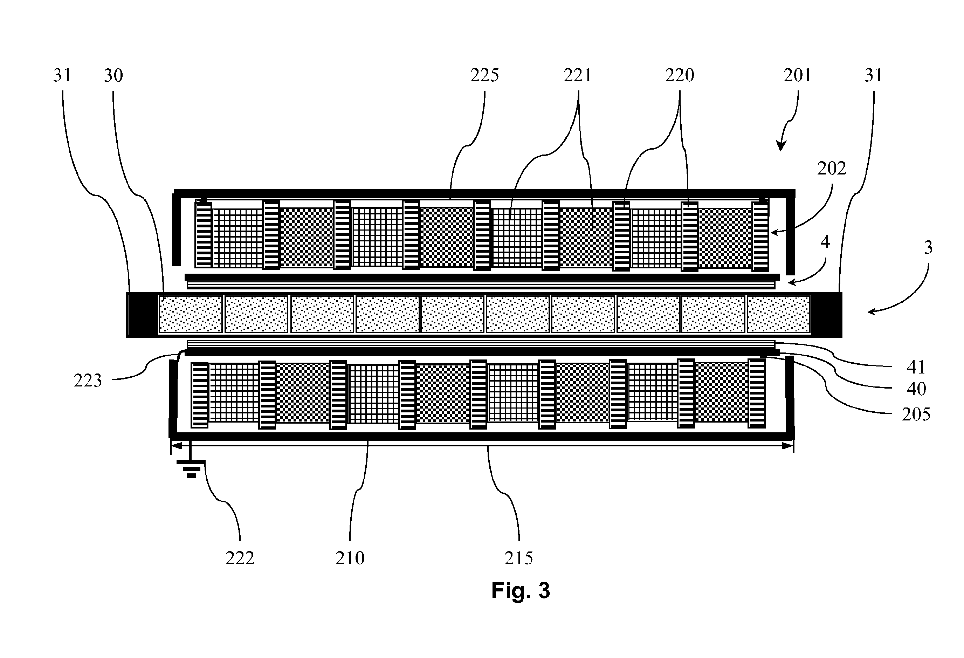

Fig. 3 zeigt einen Längsschnitt durch ein drittes Ausführungsbeispiel eines erfindungsgemässen Linearmotors 201 mit einem Stator 202. Der Stator 202 umfasst magnetisch leitende Elemente, z.B. Eisenblechpakete 220, zwischen denen Antriebswicklungen 221 angeordnet sind. Der Stator 202 weist eine vorbestimmte Länge 225 auf und ist in einem Motorgehäuse 210 angeordnet, welches mit Erdpotential verbunden ist. Der Linearmotor 201 weist ferner ein Lagerrohr 4 zur Lagerung eines Läufers 3 auf. Das Lagerrohr 4 umfasst ein Trägerrohr 40, das derart ausgebildet ist, dass es innen im Stator 202 des Linearmotors 201 anordenbar ist, sowie ein innen am Trägerrohr 40 anliegendes Gleitlager 41 zur Lagerung des Läufers 3. Das Trägerrohr 40 weist eine Länge 45 (siehe Fig. 5) auf, die zumindest im Wesentlichen der vorbestimmten Länge 225 des Stators 202 entspricht. Das Lagerrohr 4 ist über eine leitende Verbindung 223 über das Motorgehäuse 210 mit Erdpotential 222 verbunden. Die im Stator 202 vorgesehene Antriebswicklungen 221 sind gegenüber dem Lagerrohr 4 offen angeordnet, um einen möglichst hohen Wirkungsgrad des Linearmotors 201 zu ermöglichen. Ein Luftspalt 205, in welchem typischerweise Isolationsfolien angeordnet sind, trennt die Antriebswicklungen 221 und das Lagerrohr 4. Der Luftspalt 205 bewirkt, dass thermische Ausdehnungen der Eisenblechpakete 220 aufgrund der bestromten Antriebswicklungen 221 die Lagerung des Läufers 3 nicht beeinflussen. Wird das Gleitlager 41 durchgerieben, so kommt der Läufer 3 allenfalls mit dem geerdeten Trägerrohr 40 in Kontakt, nicht aber mit den Antriebswicklungen 221. Das Trägerrohr 40 kann allenfalls geringfügig kürzer sein als der Stator 202 oder aber länger als dieser ausgebildet sein, beispielsweise so lange wie die Länge 215 des Motorgehäuses 210. Es gelten diesbezüglich die gleichen Erwägungen wie bei dem Ausführungsbeispiel gemäss Fig. 1.

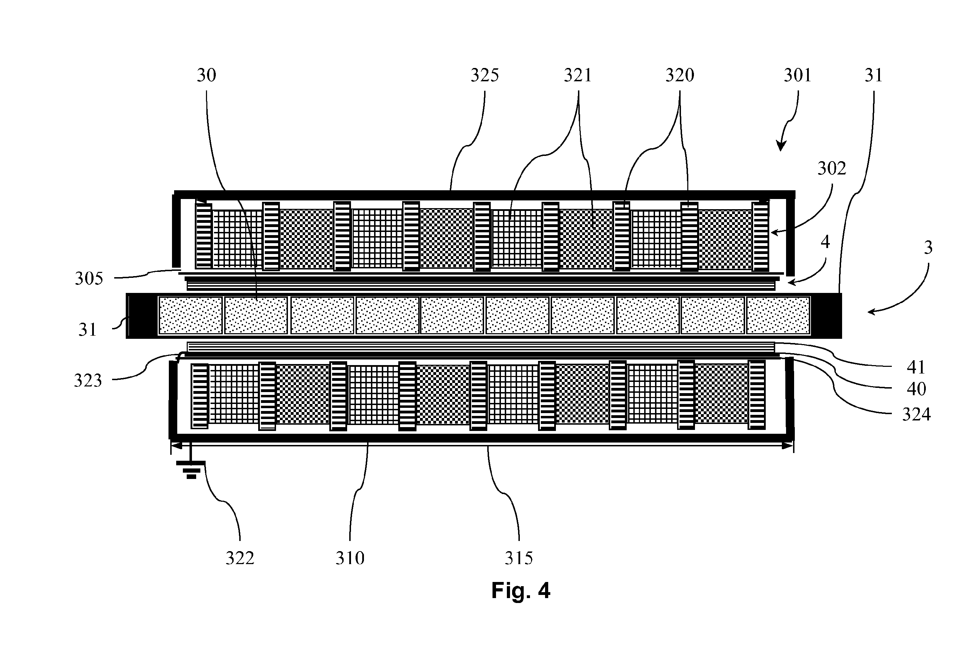

Fig. 4 zeigt einen Längsschnitt durch ein viertes Ausführungsbeispiel eines erfindungsgemässen Linearmotors 301 mit einem Stator 302. Der Stator 302 umfasst magnetisch leitende Elemente, z.B. Eisenblechpakete 320, zwischen denen Antriebswicklungen 321 angeordnet sind. Der Stator 302 weist eine vorbestimmte Länge 325 auf und ist in einem Motorgehäuse 310 angeordnet, welches mit Erdpotential verbunden ist. Der Linearmotor 301 weist ferner ein Lagerrohr 4 zur Lagerung eines Läufers 3 auf. Das Lagerrohr 4 umfasst ein Trägerrohr 40, das derart ausgebildet ist, dass es innen im Stator 302 des Linearmotors 301 anordenbar ist, sowie ein innen am Trägerrohr 40 anliegendes Gleitlager 41 zur Lagerung des Läufers.

Im Stator 302 ist ein Führungsrohr 324 angeordnet, welches das Lagerrohr 4 umschliesst. Das Trägerrohr 40 weist eine Länge 45 (siehe Fig. 5) auf, die zumindest im Wesentlichen der vorbestimmten Länge 325 des Stators 302 entspricht. Das Lagerrohr 4 ist über eine leitende Verbindung 323 über das Motorgehäuse 310 mit Erdpotential 322 verbunden. Das üblicherweise ebenfalls geerdete Führungsrohr 324 ist fest mit dem Stator 302 verbunden und ist typischerweise dünnwandig (ca. 0.2 mm - 0.4 mm, insbesondere 0.3 mm) ausgebildet, z. B. aus Chromstahl oder Carbon. Das Trägerrohr 40 des Lagerrohrs 4 kann dann dünnwandiger (ca. 0.3 mm - 0.5 mm, insbesondere 0.4 mm) ausgebildet sein als bei einem Linearmotor ohne Führungsrohr (siehe z. B. der Linearmotor von Fig 3). Die Antriebswicklungen 321 sind gegenüber dem Führungsrohr 324 offen angeordnet, um einen möglichst hohen Wirkungsgrad des Linearmotors 301 zu ermöglichen. Ein Luftspalt 305,in welchem typischerweise Isolationsfolien angeordnet sind, trennt die Antriebswicklungen 321 und das Führungsrohr 324. Der Luftspalt 305 bewirkt, dass thermische Ausdehnungen der Eisenblechpakete 320 aufgrund der bestromten Antriebswicklungen 321 die Lagerung des Läufers 3 nicht beeinflussen. Wird das Gleitlager 41 durchgerieben, so kommt der Läufer 3 allenfalls mit dem geerdeten Trägerrohr 40 in Kontakt, nicht aber mit den Antriebswicklungen 321. Das Trägerrohr 40 kann geringfügig kürzer sein als der Stator 302 oder aber länger als dieser ausgebildet sein, beispielsweise so lange wie die Länge 315 des Motorgehäuses 310. Es gelten diesbezüglich die gleichen Erwägungen wie bei dem Ausführungsbeispiel gemäss Fig. 1.

Fig. 5 zeigt einen Längsschnitt durch ein erstes Ausführungsbeispiel des Lagerrohrs 4 (siehe auch Fig. 1 bis Fig. 4) mit einem Trägerrohr 40 und einem innen am Trägerrohr 40 anliegenden Gleitlager 41. Das Gleitlager 41 besteht beispielsweise aus Kunststoff und weist eine Länge 46 auf, die zumindest im Wesentlichen der Länge 45 des Trägerrohrs 40 entspricht. Das Lagerrohr 4 zeichnet sich durch ein langlebiges Gleitlager aus und ermöglicht einen grossen Läuferhub, da die Läuferenden 31 bis weit in den Stator hinein einfahren können.

Fig. 6 zeigt einen Längsschnitt durch ein zweites Ausführungsbeispiel eines Lagerrohrs 104 des erfindungsgemässen Linearmotors, mit einem Trägerrohr 40 und einer Mehrzahl von einzelnen Lagerringen 141. Das Einbringen mehrerer einzelner Lagerringe 141 von axial kürzerer Länge ist einfacher als das Einbringen eines Gleitlagers von axial grosser Länge, das aus einem einzigen Stück produziert ist. Bei einem Innendurchmesser der Lagerringe 141 von beispielsweise 28 mm kann die Wanddicke der Lagerringe 141 ca. 0.4 mm - 0.6 mm betragen und deren Länge ca. 10 mm - 30 mm.

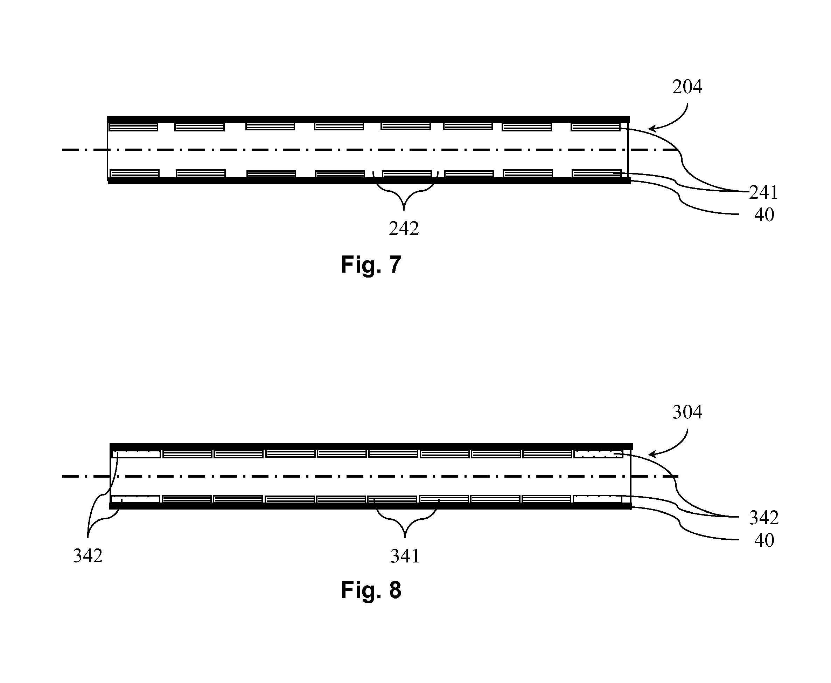

Fig. 7 zeigt einen Längsschnitt durch ein drittes Ausführungsbeispiel eines Lagerrohrs 204 des erfindungsgemässen Linearmotors, mit einem Trägerrohr 40 und voneinander beabstandet angeordneten Lagerringen 241. Zwischenräume 242 sind zwischen den jeweiligen voneinander beabstandet angeordneten Lagerringen 241 zur Vorratshaltung von Schmiermittel angeordnet.

Fig. 8 zeigt einen Längsschnitt durch ein viertes Ausführungsbeispiel eines Lagerrohrs 304 des erfindungsgemässen Linearmotors, mit einem Trägerrohr 40 und weichen Lagerringen 341 mit sehr guten Gleiteigenschaften, die im Bereich der Mitte des Lagerrohrs 304 angeordnet sind. Das Lagerrohr 304 umfasst ferner besonders langlebige Lagerringe 342, die hart ausgebildet sind und im Bereich der jeweiligen Enden des Lagerrohrs 304 angeordnet sind.

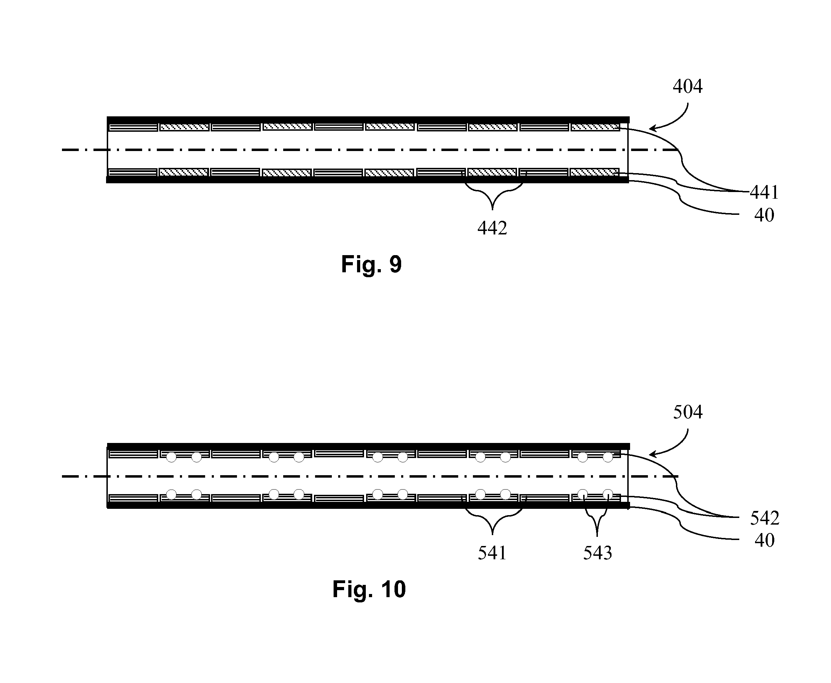

Fig. 9 zeigt einen Längsschnitt durch ein fünftes Ausführungsbeispiel eines Lagerrohrs 404 des erfindungsgemässen Linearmotors, mit einem Trägerrohr 40 und Lagerringen 441, 442 mit unterschiedlichen Eigenschaften, die abwechselnd angeordnet sind. Die Lagerringe 441, 442 weisen unterschiedliche Eigenschaften, z. B. in Bezug auf die Gleitfähigkeit, Temperaturbeständigkeit oder Feuchtigkeitsbeständigkeit auf. So können beispielsweise die Lagerringe 441 besser für eine feuchte Betriebsumgebung und die Lagerringe 442 besser für eine trockene Betriebsumgebung geeignet sein.

Fig. 10 zeigt einen Längsschnitt durch ein sechstes Ausführungsbeispiel eines Lagerrohrs 504 des erfindungsgemässen Linearmotors mit einem Trägerrohr 40 und mit Lagerringen 542, die Einfräsungen 543 zur Aufnahme von Schmiermittel aufweisen, sowie mit Lagerringen 541 ohne Einfräsungen. Diese Einfräsungen 543 erlauben, dass bei den linearen Bewegungen des Läufers 3 relativ zum Stator des Linearmotors das Schmiermittel gleichmässig im Lagerrohr 504 verbleibt und nicht das Lagerrohr 504 verlässt.

## Patentansprüche

1. Linearmotor (1; 101; 201; 301) mit einem Stator (2;102; 202; 302) und einem Läufer (3), sowie mit einem innerhalb des Stators (2; 102; 202; 302) angeordneten Lagerrohr (4; 104; 204; 304; 404; 504), welches ein Trägerrohr ((40) umfasst, das zumindest im Wesentlichen dieselbe Länge aufweist wie der Stator (2;102; 202; 302), sowie ein innen am Trägerrohr (40) anliegendes Gleitlager (41), in welchem der Läufer (3) axial beweglich gelagert ist, **dadurch gekennzeichnet, dass** das Lagerrohr (4; 104; 204; 304; 404; 504) als separates, austauschbar im Stator (2; 102; 202; 302) angeordnetes Lagerrohr (4; 104; 204; 304; 404; 504) ausgebildet ist.

2. Linearmotor nach Anspruch 1, bei dem das Gleitlager (41) eine Länge (46) aufweist, die zumindest im Wesentlichen der Länge (45) des Trägerrohrs (40) entspricht.

3. Linearmotor nach einem der Ansprüche 1 oder 2, bei dem das Gleitlager (41) eine Mehrzahl von einzelnen im Trägerrohr (40) angeordneten Lagerringen (141; 241; 341, 342; 441, 442; 541, 542) umfasst, wobei die einzelnen Lagerringe als separate, unabhängig voneinander in das Trägerrohr (40) einbringbare Lagerringe ausgebildet sind.

4. Linearmotor nach Anspruch 3, bei dem zumindest einzelne der Lagerringe (241) derart voneinander beabstandet im Trägerrohr (40) angeordnet sind, dass zwischen den jeweiligen voneinander beabstandet angeordneten Lagerringen (241) Zwischenräume (242) zur Vorratshaltung von Schmiermittel gebildet sind.

5. Linearmotor einem der Ansprüche 3 oder 4, bei dem zumindest einzelne der Lagerringe (542) Einfräsungen (543) zur Aufnahme von Schmiermittel aufweisen.

6. Linearmotor nach einem der Ansprüche 3 bis 5, bei dem die Lagerringe (141; 241; 341, 342; 441, 442; 541, 542) kraftschlüssig oder formschlüssig im Trägerrohr (40) angeordnet oder in das Trägerrohr (40) eingeklebt sind.

7. Linearmotor nach einem der Ansprüche 3 bis 6, bei dem die Lagerringe (341, 342; 441, 442) aus unterschiedlichen Materialien mit unterschiedlichen Eigenschaften, z. B. in Bezug auf die Gleitfähigkeit, Temperaturbeständigkeit oder Feuchtigkeitsbeständigkeit, hergestellt sind.

8. Linearmotor nach einem der Ansprüche 1 oder 2, bei welchem als Gleitlager (41) ein Gleitbelag in Form einer Beschichtung auf der Innenwand des Trägerrohrs (40) aufgebracht ist, z.B. durch Aufspritzen, durch Plasmabeschichtung, oder durch ein Tauchverfahren.

9. Linearmotor (101) nach einem der vorangehenden Ansprüche, der weiterhin einen Wickelkörper (120) aufweist, auf welchem Antriebswicklungen (121) angeordnet sind, sowie einen zwischen dem Wickelkörper (120) und dem Lagerrohr (4; 104; 204; 304; 404; 504) angeordneten Luftspalt oder eine elektrisch nicht leitende Isolationsschicht (105).

10. Linearmotor (1; 201; 301) nach einem der Ansprüche 1 bis 8, bei dem Antriebswicklungen (21; 221; 321) im Stator (2; 202; 302) vorgesehen sind, die gegenüber dem Lagerrohr (4; 104; 204; 304; 404; 504) offen oder nur durch eine Isolationsfolie getrennt angeordnet sind.

11. Linearmotor (201; 301) nach Anspruch 10, bei dem der Stator (202; 302) magnetisch leitfähige Elemente (220; 320), z.B. Eisenblechpakete, umfasst und die Antriebswicklungen (221; 321) zwischen den magnetisch leitfähigen Elementen (220; 320) angeordnet sind.

12. Linearmotor (1) nach Anspruch 10, bei dem der Stator (2) magnetisch nicht leitende Unterteilungen (20), z.B. Kunststoffscheiben, umfasst und die Antriebswicklungen (21) zwischen den magnetisch nicht leitenden Unterteilungen (20) angeordnet sind.

13. Linearmotor (301) nach einem der Ansprüche 9 bis 12, bei dem im Stator (302) zwischen den Antriebswicklungen (321) und dem Lagerrohr (4; 104; 204; 304; 404; 504) ein Führungsrohr (324) angeordnet ist, welches das Lagerrohr (4; 104; 204; 304; 404; 504) umschliesst.

## Claims

1. Linear motor (1; 101; 201; 301) comprising a stator (2; 102; 202; 302) and an armature (3), and further comprising a bearing tube (4; 104; 204; 304; 404; 504) arranged inside the stator (2; 102; 202; 302), the bearing tube (4; 104; 204; 304; 404; 504) comprising a carrier tube (40) having at least essentially the same length as the stator (2; 102; 202; 302) as well as a sliding bearing (41) fittingly arranged inside the carrier tube (40), with the armature (3) being axially movably mounted to the sliding bearing, **characterized in that** the bearing tube (4; 104; 204; 304; 404; 504) is formed as a separate bearing tube (4; 104; 204; 304; 404; 504) replaceably arranged in the stator (2; 102; 202; 302) .

2. Linear motor according to claim 1, wherein the sliding bearing (41) has a length (46) corresponding at least essentially to the length (45) of the carrier tube (40).

3. Linear motor according to anyone of claims 1 or 2, wherein the sliding bearing (41) comprises a plurality of individual bearing rings (141; 241; 341, 342; 441, 442; 541, 542) arranged in the carrier tube (40), wherein the individual bearing rings are formed as separate bearing rings which can be introduced into the carrier tube (40) independently of each other.

4. Linear motor according to claim 3, wherein at least individual bearing rings (241) are arranged in the carrier tube (40) spaced from each other in a manner such that gaps (242) for storing a lubricant are formed between the individual spacedly arranged bearing rings (241).

5. Linear motor according to anyone of claims 3 or 4, wherein at least individual ones of the bearing rings (542) have milled slots (543) for receiving a lubricant.

6. Linear motor according to anyone of claims 3 to 5, in which the bearing rings (141; 241; 341, 342; 441, 442; 541, 542) are arranged in the carrier tube (40) in a force-locking or form-fitting manner, or are glued into the carrier tube (40).

7. Linear motor according to anyone of claims 3 to 6, in which the bearing rings (341, 342; 441, 442) are made of different materials having different properties, for example with respect to the sliding capability, temperature resistance or moisture resistance.

8. Linear motor according to anyone of claims 1 or 2, wherein, as sliding bearing (41), a sliding layer in form of a coating is applied on the inner wall of the carrier tube (40), for example by spraying, by plasma coating, or by a dipping process.

9. Linear motor (101) according to anyone of the preceding claims, further comprising a winding body (120) having driving windings (121) arranged thereon, as well as an air gap or an electrically non-conductive insulating layer (105) arranged between the winding body (120) and the bearing tube (4; 104; 204; 304; 404; 504).

10. Linear motor (1; 201; 301) according to anyone of claims 1 to 8, wherein driving windings (21; 221; 321) are provided in the stator (2; 202; 302) and are arranged directly facing the bearing tube (4; 104; 204; 304; 404; 504) or separated from the bearing tube through an insulating foil only.

11. Linear motor (201; 301) according to claim 10, wherein the stator (202; 302) comprises magnetically conductive elements (220; 320), for example stacks of sheet iron, and wherein the driving coils (221; 321) are arranged between the magnetically conductive elements (220; 320).

12. Linear motor (1) according to claim 10, wherein the stator (2) comprises magnetically non-conductive partitions (20), for example plastic discs, and wherein the driving coils (21) are arranged between the magnetically non-conductive partitions (20).

13. Linear motor (301) according to anyone of claims 9 to 12, wherein a guiding tube (324) is arranged in the stator (302) between the driving coils (321) and the bearing tube (4; 104; 204; 304; 404; 504), the guiding tube (324) surrounding the bearing tube (4; 104; 204; 304; 404; 504).

## Revendications

1. Moteur linéaire (1 ; 101 ; 201 ; 301) avec un stator (2 ; 102 ; 202 ; 302) et un armature (3) ainsi qu'avec un tube de palier (4 ; 104 ; 204 ; 304 ; 404 ; 504) disposé en dedans du stator (2 ; 102 ; 202 ; 302), le tube de palier comprenant un tube porteur (40) qui a au moins essentiellement la même longueur que le stator (2 ; 102 ; 202 ; 302), ainsi qu'un palier lisse (41) épousant l'intérieur du tube porteur (40), dans lequel l'armature (3) est monté de façon à être mobile en direction axiale, **caractérisé en ce que** le tube de palier (4 ; 104 ; 204 ; 304 ; 404 ; 504) est formé comme tube de palier (4 ; 104 ; 204 ; 304 ; 404 ; 504) séparé et disposé de manière échangeable dans le stator (2 ; 102 ; 202 ; 302).

2. Moteur linéaire selon la revendication 1, dans lequel le palier lisse (41) présente une longueur (46) qui correspond au moins essentiellement à la longueur (45) du tube porteur (40).

3. Moteur linéaire selon une des revendications 1 ou 2, dans lequel le palier lisse (41) comprend une pluralité de bagues de palier (141 ; 241 ; 341 , 342 ; 441 , 442 ; 541, 542) individuelles disposés dans le tube porteur (40), dans lequel les bagues de palier individuelles sont formées comme bagues de palier séparées, indépendantes les unes des autres pouvant être introduites dans le tube porteur (40).

4. Moteur linéaire selon la revendication 3, dans lequel au moins quelques-unes des bagues de palier (241) individuelles sont disposées de façon espacées les unes des autres dans le tube porteur (40) de manière à former des espaces intermédiaires (242) entre les bagues de palier (241) correspondantes espacées les unes des autres pour le stockage de lubrifiant.

5. Moteur linéaire selon l'une des revendications 3 ou 4, dans lequel au moins quelques-unes des bagues de palier (542) individuelles présentent des fraisages (543) pour la réception de lubrifiant.

6. Moteur linéaire selon l'une des revendications 3 à 5, dans lequel les bagues de palier (141 ; 241 ; 341 , 342 ; 441, 442 ; 541 , 542) sont disposées de façon mécaniquement solidaire par frettage ou par encastrement dans le tube porteur (40) ou collé à l'intérieur du tube porteur (40).

7. Moteur linéaire selon l'une des revendications 3 à 6, dans lequel les bagues de palier (341 , 342 ; 441 , 442) sont fabriqués de matériaux différents ayant des propriétés distinctes, se rapportant par exemple à la capacité de glissement, à la résistance à la température, ou à la résistance à l'humidité.

8. Moteur linéaire selon l'une des revendications 1 ou 2, dans lequel un revêtement de glissement sous forme d'une couche est déposé comme palier lisse (41) sur la paroi intérieure du tube porteur (40), par exemple par pulvérisation, par déposition par plasma, ou par un procédé d'immersion.

9. Moteur linéaire (101) selon l'une des revendications précédentes, présentant en outre un corps de bobinage (120), sur lequel sont agencés des bobines de propulsion (121) ainsi qu'un espace d'air ou une couche isolante non-conductrice d'électricité (105) disposé entre le corps de bobinage (120) et le tube de palier (4 ; 104 ; 204 ; 304 ; 404 ; 504).

10. Moteur linéaire (1 ; 201 ; 301) selon l'une des revendications 1 à 8, dans lequel des bobines de propulsion (21 ; 221 ; 321) sont prévues dans le stator (2 ; 202 ; 302) et qui sont agencées en face du tube de palier (4 ; 104 ; 204 ; 304 ; 404 ; 504) de façon ouverte ou séparées seulement par un film d'isolation.

11. Moteur linéaire (201 ; 301) selon la revendication 10, dans lequel le stator (202 ; 302) comprend des éléments magnétiquement conducteurs (220 ; 320), par exemple des paquets de tôle, et dans lequel les bobines de propulsion (221 ; 321) sont disposées entre les éléments magnétiquement conducteurs (220 ; 320).

12. Moteur linéaire (1) selon la revendication 10, dans lequel le stator (2) comporte des subdivisions (20) magnétiquement non-conductrices, par exemple des disques en matière plastique, et les bobines de propulsion (21) sont disposées entre les subdivisions magnétiquement non-conductrices (20).

13. Moteur linéaire (301) selon l'une des revendications 9 à 12, dans lequel un tube de direction (324) est disposé dans le stator (302) entre les bobines de propulsion (321) et le tube de palier (4 ; 104 ; 204 ; 304 ; 404 ; 504), lequel enveloppe le tube de palier (4 ; 104 ; 204 ; 304 ; 404 ; 504).
